Europäisches Patentamt

European Patent Office

Office européen des brevets

(11) EP 0 763 731 A2

(19)

(12) **EUROPEAN PATENT APPLICATION**

(43) Date of publication:
19.03.1997 Bulletin 1997/12

(51) Int Cl.$^6$: **G01N 29/02**, G01N 21/76

(21) Application number: **96305904.3**

(22) Date of filing: **12.08.1996**

(84) Designated Contracting States:
CH ES FI LI SE

(30) Priority: **15.09.1995 GB 9518876**

(71) Applicant: **AEA Technology plc**
**Didcot, Oxfordshire OX11 0RA (GB)**

(72) Inventors:
• **Gardiner, Michael Paul**
**Harwell, Oxfordshire OX11 09Q (GB)**

• **Jefferies, Nicholas Lloyd**
**Southmoor, Oxfordshire OX13 5BX (GB)**

(74) Representative: **Mansfield, Peter Turquand**
**AEA Technology**
**Patents Department**
**329 Harwell**
**Didcot, Oxfordshire OX11 0RA (GB)**

(54) **Liquid flow monitor**

(57)     An apparatus and a method are provided to enable liquid flow rates and tracer concentrations to be measured simultaneously, for example in a borehole. A probe 10 contains an optical fibre bundle 20 to illuminate the liquid and to detect luminescence due to the tracer; a Raman signal from the liquid is also detected. The probe 10 also contains ultrasonic transducers 22,24 for emitting beams of ultrasonic pulses, and for detecting pulses scattered by particles in the liquid. The arrival times of such scattered pulses are monitored using time gates, so individual particles are tracked, and particle velocity (and hence liquid flow) measured. By combining these measurements of liquid flow and tracer concentrations, the mass flux of tracer entering the borehole at different depths may be calculated, so that flowpaths through a formation can be characterised.

EP 0 763 731 A2

## Description

This invention relates to an apparatus and to a method for monitoring flow of a liquid, for example in a borehole.

The apparatus is particularly but not exclusively intended for use in a method of monitoring groundwater flows using a tracer which can be detected by fluorescence (or luminescence). For example in situ tracer migration experiments through earth or rock formations may be required when assessing if a site is suitable for waste disposal or as a waste repository. It would be desirable to be able not only to detect and measure the concentration of a tracer (such as a dye), but also to measure the associated liquid flow, within a borehole or other body of liquid.

According to the present invention there is provided an apparatus for monitoring a liquid, the apparatus comprising a probe immersible in the liquid and a flexible cable for connecting the probe to an analysis unit, the probe being of generally cylindrical form and comprising:

(a) at least two detector ultrasonic transducers arranged to transmit beams of ultrasonic pulses into the liquid, the axis of each beam being inclined to the longitudinal axis of the probe, and each transducer being arranged to detect pulses of ultrasound scattered back to it by a particle in the liquid from successive emitted pulses;

(b) a calibration ultrasonic transducer arranged to transmit ultrasound through the liquid over a fixed distance, to enable the speed of ultrasound in the liquid to be determined;

(c) an optical fibre bundle whose ends are exposed to the liquid on the axis of the probe and adjacent to the detector transducers, including at least one delivery fibre whose end is adjacent to the ends of a plurality of return fibres;

and the apparatus also comprising means for determining the flow velocity of particles in the liquid from the arrival times of successive detected pulses and from the signals from the calibration ultrasonic transducer; means for transmitting light down the delivery fibre at such a wavelength as to cause luminescence in a tracer in the liquid, and to cause Raman scattering by the liquid; and means to detect light received by the return fibres due to the said luminescence and the said Raman scattering, and for determining therefrom the concentration of the tracer.

The apparatus enables the concentration of a tracer dye such as rhodamine-wt to be measured in a borehole containing water, the apparatus being continuously calibrated in situ by means of the water Raman signal for variations in the turbidity of the water for example. At the same time the water flow velocity is measured over a region of the borehole spanning that from which the concentration of tracer is measured.

The arrival time of a detected pulse means the time after transmission of a pulse at which a corresponding scattered pulse is detected. If a particle is moving then the arrival time of the corresponding detected pulse will be different for successive emitted pulses. By using electronic time gates in looking for and then tracking such scattered pulses, the particle movements can be monitored in real time. The term particle in this context may be a particle of solid material carried along with the water, or may be a small gas bubble which would be similarly entrained. The apparatus enables flow to be observed both along and across a borehole, and can enable secondary inflows to be detected where a fracture in the formation is intersected by the borehole.

Various types of tracer have been used in tracer migration experiments. The main criterion is that the tracer does not interact geochemically with the rock. Three classes of tracers commonly used are (I) inactive isotopes of halides (chloride, iodide, bromide); (ii) radioactive tracers (for example, tritiated water, $^{82}$Br, $^{131}$I); and (iii) fluorescent dyes (for example, fluorescein, rhodamine-wt). Typically, in a tracer migration experiment, the flow field is perturbed by injecting or abstracting groundwater from one or more boreholes. The objective is to generate a well-defined flow field into which, at steady-state, the groundwater tracer can be added. The tracer migrates from the injection borehole through the rock, and its arrival at a monitoring borehole (or boreholes) is recorded. The typical approach for monitoring the breakthrough of the tracer at the monitoring borehole is to abstract water from that borehole and to determine the concentration of tracer in the abstracted groundwater. This approach quantifies the average concentration of tracer in the abstracted groundwater, but provides no information on the positions of inflow of the tracer into the borehole.

The apparatus of the present invention enables low concentrations of fluorescent dyes in water to be measured. Thus the fibre optics components of the probe can provide information on the points at which a tracer enters the borehole. However, in order to determine the mass distribution of tracer with depth (that is, to identify the points at which most of the tracer enters the borehole), it is necessary to combine the fibre optics tool with the flow monitoring device; the flow meter will provide a measurement of the depth-dependent groundwater velocity along the borehole axis. The groundwater flux data and tracer concentration data can be used to identify the locations at which groundwater and tracer enter the borehole. Combining this information (the flow rate into the borehole at any point and the concentration of tracer in that inflowing groundwater) enables the mass flux of tracer entering the borehole at any point to be calculated. This spatial information is of great importance, as it characterises the flowpaths of the tracer through the rock mass. It enables different conceptual models of the hydrogeological structure of the rock to be distinguished, and characterises one of the components of hydrodynamic dispersion. Thus the apparatus of the invention enables this spatial information to be determined, which hitherto has required complicated and expensive procedures.

Thus the invention also provides a method of monitoring a liquid, such as a liquid in a borehole, the method involving immersing a probe in the liquid, wherein the probe measures the concentration of a tracer optically using a fibre-optic device, and measures the liquid flow ultrasonically by observing the arrival times of successive ultrasonic pulses.

This method can be performed using the apparatus defined earlier.

It should be appreciated that because the transducers are inclined, the ultrasonic beams traverse the entire width of the borehole, so that velocity measurements can be obtained across the entire width. There is an inevitable dead time after a pulse has been emitted before a transducer can detect pulses (because a transducer rings for a short time after emitting a pulse), which corresponds to a dead space in front of the transducer within which flow measurements cannot be obtained. Desirably the two transducers are inclined so their beams cross each other, and preferably this beam cross-over is beyond the dead space, so there is no part of the borehole width in which velocity measurements cannot be made. In any event velocity measurements made close to a transducer would give unrepresentative flow values, because the liquid flow is affected by the presence of the probe. In a preferred embodiment the transducers are arranged so their beams are inclined at about 30° to the axis of the probe.

The invention will now be further and more particularly described, by way of example only, and with reference to the accompanying drawings in which:

Figure 1    shows a borehole probe in elevation; and

Figure 2    shows a sectional view on the line II-II Figure 1.

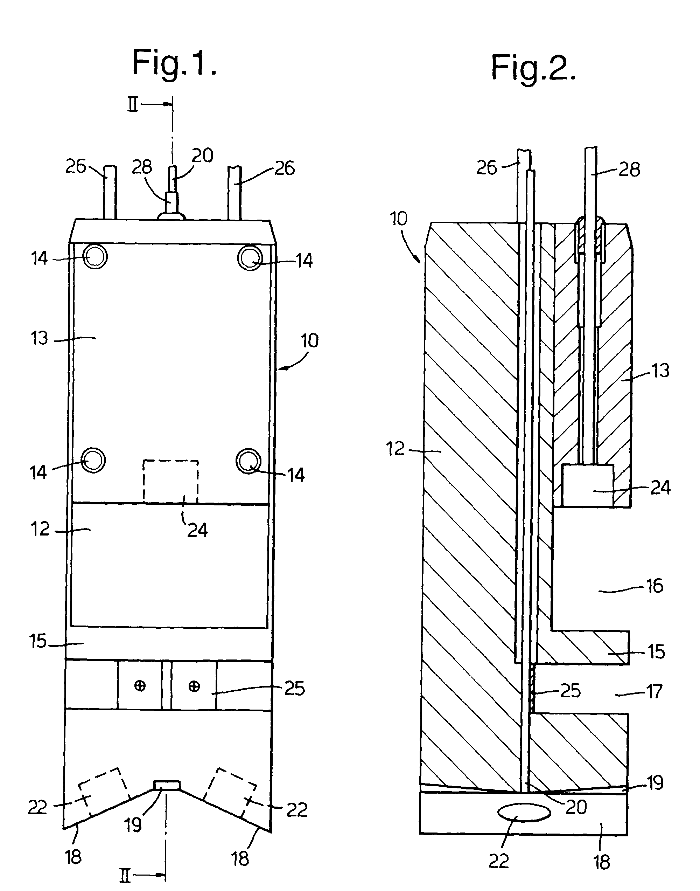

Referring to Figure 1, a borehole probe 10 is of generally cylindrical shape, 50 mm in diameter and 185 mm long, comprising two body portions 12, 13 of Delrin (trademark) linear polyoxymethylene-type acetal resin fixed together by bolts 14. Referring also to Figure 2, the major body portion 12 defines an 18 mm-thick flat plate 15 whose upper surface lies in a radial plane 30 mm below the lower surface of the minor body portion 13, so as to define a 30 mm wide gap 16. Below the plate 15 is a radial slot 17 which extends half way through the major body portion 12. The lower end of the body portion 12 defines two surfaces 18 each inclined at 30° to the radial plane so as to form a shallow V; the inclined surfaces 18 intersect at a groove 19 whose depth increases with radius from zero on the axis, so the base of each half of the groove 19 slopes at 5° to the radial plane.

The probe 10 includes an optical fibre bundle 20, two measuring ultrasonic 6 MHz transducers 22, and a calibrating ultrasonic 6 MHz transducer 24. The optical fibre bundle 20 extends through an axial hole through the body portion 12 to a 2 mm diameter aperture on the axis at the lower end; at the base of the slot 17 the bundle 20 is secured by a cable clamp 25. The measuring transducers 22 are installed in respective apertures in the inclined surfaces 18, so the face of the transducer 22 is flush with the surface 18, and electrical cables 26 communicate with them via corresponding holes (not shown) in the body portion 12. The calibrating transducer 24 is installed in an aperture at the lower end of the body portion 13 so as to face the upper surface of the plate 15 across the gap 16; an electric cable 28 communicates with it via a hole in the body portion 13. The cables 26 and 28 and the bundle 20 all extend within a 200 m long umbilical cable (not shown) so the probe can be lowered to different depths in a borehole, the umbilical cable connecting the probe 10 to electronic and optical signal generation and analysis equipment (not shown).

In operation the probe 10 is lowered to a desired depth in a water-filled borehole. Water occupies the gap 16 so that timing pulse-echo signals from the transducer 24 enables the speed of ultrasound at that depth to be determined. The measuring transducers 22 are activated alternately; each is caused to transmit brief pulses of ultrasound, for example at 4 ms intervals, and to detect any returning ultrasonic pulses due to scattering from small particles in the water. Such scattered pulses are detected in real time with the aid of timing gates. (The method of operation of such transducers is described in greater detail in GB 2 282 886).

For example a first gate might be of width 10 μs, and be set to open 70 μs after the pulse is transmitted. If any scattered pulse is detected while the first gate is open its arrival time is determined, and after the next pulse a second gate also of width 10 μs is used, centred at the arrival time of the first scattered pulse. If a scattered pulse is detected while the second gate is open, its arrival time is determined; hence the change in arrival time can be calculated. Then a narrower gate, say of width 2 μs, is used after the next transmitted pulse, centred at the expected arrival time. If a scattered pulse is detected while the third gate is open, its arrival time is determined, and the change of arrival time calculated. Then similarly a narrow gate (say 2 μs) can be used after the next transmitted pulse, centred at the expected arrival time.

Thus for a number of successive pulses, the arrival times t of scattered pulses are determined. If the scattered pulses are all scattered by the same particle, which is moving at constant velocity v, then the change in arrival time between one pulse and the next should be the same every time; and the best estimate of this

time change $\Delta t$ is given by the average of the calculated values of the changes in arrival time. If the particle's direction of motion is at an angle of $\theta$ to the beam axis, the speed of ultra-sound in the water is c (where c is much faster than v), and the period between successive transmitted pulses is T, then:

$$v \cos\theta = c \frac{\Delta t}{2T}$$

The transducers 22 and 24 thus enable the speed of small particles, which can be assumed to be carried along with the water flow, to be measured.

The optical fibre bundle 20 comprises a transmitting optical multimode fibre of diameter 400 $\mu$m through which light from a laser is transmitted into the water. The transmitting fibre is surrounded by six receiving optical multimode fibres each of diameter 400 $\mu$m. In this embodiment the end portions of the receiving fibres are optically isolated from the adjacent end portion of the transmitting fibre by a layer of aluminium foil, which improves the signal to noise ratio. All the tips of the fibres are in a common plane. The receiving fibres collect any scattered or luminescent light and transmit it back to an analysis unit where the light is focussed onto a spectrograph and hence onto an intensified diode array. The resulting signals from the diode array can be digitised for computer analysis.

For example the laser might emit light at 532 nm. This wavelength causes rhodamine-wt to luminesce at about 573 nm, so that measurement of the intensity of the received light at this wavelength enables the concentration of rhodamine-wt to be determined. The concentration can be measured to an accuracy of about $\pm$ 0.1 ppb, down to a level below 0.3 ppb (parts per thousand million). There is also a Raman signal from water (at about 610 nm), so that by monitoring the received light at this wavelength the tracer concentration measurements can be continuously calibrated in situ, to take account of any variations in the intensity of the emitted light, or variations in the turbidity of the water, for example.

It will be appreciated that the transmitted light must be of a suitable wavelength to cause the tracer to luminesce. In the case of rhodamine-wt other suitable wavelengths for this purpose would be 488 nm and 514.5 nm (which are both emitted by argon ion lasers). However if the transmitted light is of shorter wavelength the Raman light from water would also be at a shorter wavelength; and with 488 nm transmitted light the Raman signal is swamped by the luminescence signal for tracer concentrations above about 1 ppb. Thus it is preferable to use a transmitted light of wavelength above 500 nm.

Thus the probe 10 enables the water flow and the tracer concentration to be measured simultaneously at any desired depth in a borehole, in both cases the requisite calibration measurements being made in situ. Hence the flow rate at which water enters the borehole at different depths - for example through different fractures - can be determined, even if some of the water flows do not contain tracer.

## Claims

1. An apparatus for monitoring a liquid, the apparatus comprising a probe (10) immersible in the liquid and a flexible cable (20,26,28) connected to the probe, the probe (10) comprising at least one ultrasonic transducer (22) arranged to transmit a beam of ultrasonic pulses into the liquid, and to detect pulses of ultrasound scattered back to it by an individual particle in the liquid from successive emitted pulses; and characterised by also comprising an optical sensor (20) to cause luminescence in a tracer in the liquid, and to detect the said luminescence; and means to determine from signals from the transducer and from the optical sensor the flow velocity of the particles in the liquid and the concentration of the tracer in the liquid.

2. An apparatus as claimed in Claim 1 wherein the probe (10) is of generally cylindrical form, and comprises:

   (a) at least two of the said ultrasonic transducers (22), the axes of the respective beams of ultrasonic pulses each being inclined to the longitudinal axis of the probe (10);

   (b) a calibration ultrasonic transducer (24) arranged to transmit ultrasound through the liquid over a fixed distance, to enable the speed of ultrasound to be determined;

   and the apparatus also comprises means for determining the flow velocity of particles in the liquid from the arrival times of successive detected pulses and from the signals from the calibration ultrasonic transducer (24).

3. An apparatus as claimed in Claim 2 wherein the axes of the ultrasonic beams are inclined so as to cross each other at a position from which scattered pulses can be detected.

4. An apparatus as claimed in Claim 2 or Claim 3 wherein the axes of the ultrasonic beams are each inclined at about 30° to the axis of the probe.

5. An apparatus as claimed in any one of the preceding claims wherein the probe (10) is of generally cylindrical form, and the optical sensor comprises:
   (c) an optical fibre bundle (20) whose ends are exposed to the liquid on the axis of the probe (10) and adjacent to at least one ultrasonic transducer (22), including at least one delivery fibre whose end is adjacent to the ends of a plurality of return fibres; and the apparatus also includes means for transmitting light down the delivery fibre at such a wavelength as to cause luminescence in a tracer in the liquid, and to cause Raman scattering by the liquid; and means to detect light received by the return fibres due to the said luminescence and the said Raman scattering, and for determining therefrom the concentration of the tracer.

6. A method of monitoring a liquid, such as a liquid in a borehole, the method involving immersing a probe (10) in the liquid, wherein the probe measures the concentration of a tracer optically using a fibre-optic device (20), and measures the liquid flow ultrasonically (22) by observing the arrival times of successive ultrasonic pulses scattered by an individual particle in the liquid.

7. A method of characterising the flow paths of water through a rock formation, comprising abstracting water from a borehole in the formation, injecting a tracer into the formation at a location spaced apart from the abstracting borehole, and by means of a probe (10) as claimed in Claim 1 within the abstracting borehole determining the positions at which water and tracer flow into the borehole and their rates of flow.

# Fig.1.

# Fig.2.